Europäisches Patentamt

European Patent Office

Office européen des brevets

(11) Publication number: **0 483 890 A1**

# EUROPEAN PATENT APPLICATION

(21) Application number: **91202369.4**

(22) Date of filing: **17.09.91**

(51) Int. Cl.5: **G01R 1/14**, G01R 1/04

(30) Priority: **09.10.90 US 594470**

(43) Date of publication of application:
**06.05.92 Bulletin 92/19**

(84) Designated Contracting States:
**DE FR GB IT**

(71) Applicant: **DELCO ELECTRONICS CORPORATION**
**700 East Firmin Street**
**Kokomo Indiana 46902(US)**

(72) Inventor: **Mac Manus, Daniel Charles**
**114 N. Howell Street**
**Owosso, MI 48867(US)**

(74) Representative: **Haines, Arthur Donald et al**
**Patent Section 1st Floor Gideon House 28**
**Chapel Street**
**Luton, Bedfordshire LU1 2SE(GB)**

(54) **Armature assembly.**

(57) An armature and shaft assembly (14) useful in gauges and stepper motors is encapsulated for ease of manufacture and diversity of application, the capsule (14) being suitable for sealing in damping fluids (25) and for allowing magnetization of the armature (24) after assembly of the capsule (14), providing protection against contamination by dust, and the like.

FIG.1

This invention relates to an armature assembly for use in electric gauges and motors.

It is commonplace in automotive vehicle instrumentation to use electric gauges driving pointers mounted on the ends of gauge shafts to indicate the measure of various vehicle parameters, such as vehicle speed and engine speed (RPMs). A common type of gauge has a plastic bobbin supporting an outer winding and a permanent magnet armature on a spindle within a cavity defined by the bobbin. Often, a damping fluid is placed within the cavity to prevent erratic pointer movement caused by fluctuations in the signal driving the gauge.

A characteristic of these known types of gauge is the difficulty of creating a leak-resistant seal for the cavity within which the damping fluid and the armature are placed. A leak problem can cause a high scrap rate of gauges. Also, because the coils are cross-wound on the bobbins, the flexibility of coil designs for such gauges is limited.

Another characteristic of the known gauges is that when the armature is manufactured, often it is at first not a magnet but a material such as a polymer bonded ferrite or any equivalent material which can be magnetized through application of a strong magnetic field to become a permanent magnet. In these cases, the magnetizing process must take place some time during the construction of the gauge. Since the magnetizing fixture cannot get close enough to the armature once the armature is inserted in the bobbin, it is difficult to magnetize the armature after insertion into the bobbin. Consequently, magnetization of the armature is usually done before insertion into the bobbin. The difficulty with this method of manufacture is that the armature is subject to attraction of dust and dirt during and after the magnetization process. These impurities are an additional contributing factor to the scrap rate of gauges.

The present invention seeks to provide an improved armature assembly.

According to an aspect of the present invention, there is provided an armature assembly as defined in claim 1.

The present invention can provide an improved encapsulated armature assembly useful in gauges and stepper motors which overcomes many of the limitations of previous gauges. The capsule design can provide a more leak-resistant cavity for gauge damping fluid and may have a small magnetic air gap between the armature and the outside of the capsule. Such an air gap allows the armature to be assembled within the capsule before it is magnetized and to be magnetized later, once it is within the capsule or even within the final gauge assembly.

This invention is suitable for implementation into various types of gauge. For example, the capsule may be sub-assembled and then placed within a cross-wound bobbin and operated in a similar way to the known gauges mentioned above. Alternatively, the capsule may be placed in proximity to various windings on separate coil forms and operated in response to magnetic fields created by those windings.

In a practical embodiment, the armature assembly comprises a shaft upon which is mounted an armature portion made out of material capable of being magnetically charged to form a permanent magnet. A first bearing is placed at a closed end of the capsule shell. One end of the shaft is placed in the first bearing and a second bearing within which the shaft rotates is mounted at an open end of the capsule shell, forming a leak-resistant seal with the shell. The armature portion of the shaft is fitted in the capsule between the two bearings. The capsule shell is substantially magnetically permeable and the magnetic air gap between the outer surface of the capsule shell (which is considered part of the magnetic air gap) and the armature is small such that the armature portion of the shaft may be magnetized by a strong charging magnetic field imposed on the capsule from outside the capsule.

An embodiment of the present invention is described below, by way of illustration only, with reference to the accompanying drawings, in which:-

Figure 1 is a sectional view showing the structure of an embodiment of armature and shaft assembly; and

Figure 2 is a schematic diagram showing the armature assembly of Figure 1 in proximity to four coils for use as a gauge or a stepper motor.

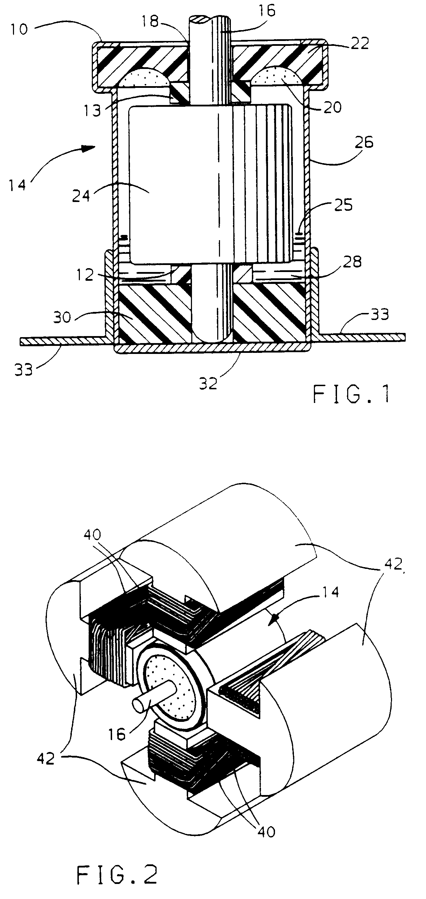

Referring to figure 1, an encapsulated armature and shaft assembly 14 includes an outer shell 26, a shaft 16 containing an armature 24, and first and second bearings 30 and 22. This assembly 14 is suitable for a wide variety and size of gauges and is particularly well suited for miniature gauges as its width can be in the range of 6 mm (0.25 inches) or smaller.

The outer shell 26 is manufactured from copper, aluminium or any other suitable magnetic permeable material and may be extruded from a cylindrical blank through a proper form or manufactured through any other suitable technique.

As can be seen, the outer shell 26 is closed at the first end 32, near bearing 30, and is open at its opposite, second end, near bearing 22. Due to its magnetic permeability, the outer shell 26 can be considered as part of the air gap between armature 24 and any magnetic field generator (such as coils 40 in Figure 2) placed outside the shell 26.

The armature 24 is preferably of a material which may be charged into a permanent magnet, such as a polymer bonded ferrite, glass ferrite, Alnico™, or any other suitable material, and forms a cylinder around the shaft 16. In order to prevent contamination from different forms of dust and dirt, it is preferable that the armature 24 is not magnetized before insertion into the encapsulated armature and shaft assembly 14.

In the manufacture of the encapsulated armature and shaft assembly 14, the bearing 30 is placed at the bottom of the shell 26. The bearing 30 may be of plastics material and may be a press-fit into the outer shell 26. In the example shown, a separate spacer 12 is placed between the bearing 30 and the armature 24. In practice, this spacer is not necessary, or may be moulded as part of bearing 30 if desired. Next, the shaft 16 with the armature 24 is inserted in the bearing 30. The closed end 32 of the outer shell 26 acts as a stop to keep the shaft 16 in the proper position in the direction of the bearing 22.

Another spacer 13 is placed above the armature 24, as shown, and bearing 22 is then placed at the open end of the outer shell 26, which is widened as shown.

The ends 10 of the outer shell 26 are crimped around the bearing 22, as shown so as to seal the capsule. In many cases, it is desirable to have damping fluid 25 within the capsule to prevent erratic pointer movements which can be caused by slight variations in the signal to the gauge in which the encapsulated armature and shaft assembly 14 might be used. For these cases, a small amount of damping fluid 25 is placed in the cavity 28 before the second bearing 22 is sealed into the assembly. The viscosity of the damping fluid 25 may vary to suit the particular gauge in which the assembly 14 is to be incorporated. Typically, only a small amount of fluid is required to dampen such gauges, so the majority of cavity 28 is usually filled with air.

The crimped end 10 of the outer shell 26 around the outer bearing 22 provides a leak-resistant seal to keep the damping fluid 25 within the cavity 28. A gap 18 between the shaft 16 and the bearing 22 is preferably of the order of 0.05 mm (0.002 inches) and is also leak resistant. To discourage the damping fluid 25 from leaking out of the gap 18, a channel 20 is preferably placed in the bearing 22. This channel tends to trap any damping fluid 25 and prevent leakage in the event that the encapsulated armature and shaft assembly 14 is oriented in such a manner that in use the damping fluid 25 tends to flow towards the gap 18.

Once the second bearing 22 is sealed into place, the encapsulated armature and shaft assembly 14 is a complete unit ready for use in a variety of applications. It is at this time that it may be desirable to magnetize the armature 24. This is done by simply applying a strong magnetic field across the encapsulated armature and shaft assembly 14 and armature 24 perpendicular to the axis of shaft 16 and maintaining the field for several seconds. This process of magnetization of polymer bonded ferrites and equivalent materials is well known to those skilled in the art.

Figure 2 is one example of a wide variety of implementations in which the assembly of Figure 1 is well suited. Reference numeral 42 generally designates four coil forms which may be of plastics material or metal and are mounted so as to be stationary. Each coil form 42 is wound with electrical wiring to form coils 40 which, when flowing with electrical current, create magnetic fields which flow through the outer shell of the encapsulated armature and shaft assembly 14. The shell 26 (Figure 1) of the encapsulated armature and shaft assembly 14 is non-rotatably mounted on a support (not shown) by tabs 33 (Figure 1) attached to the outer shell 26. The magnetic fields created by the coils 40 act on the armature 24 (Figure 1) to rotate the shaft 16.

As an example of the diversity of uses of the assembly 14, the apparatus shown in Figure 2 can be operated either as an air core gauge or a stepper motor. To operate the apparatus as an air core gauge, each coil 40 is connected in series with the coil opposite it relative to the encapsulated armature and shaft assembly 14 so that when current is applied, the two connected coils 40 generate a magnetic field in the same direction. The circuit can then be driven in the manner of conventional two-coil air core gauges. In this instance a pointer would be attached to the end of shaft 16 for use in a variety of gauge applications.

Alternatively, the coils may be driven in different phases for operating the apparatus as a stepper motor. One skilled in the art would easily be able to implement the structure shown in Figure 2 as a stepper motor or as a gauge suitable for automotive instrumentation.

In an alternative embodiment, the bearing 30 is moulded to include a stop for the shaft 16 to prevent the shaft 16 from resting directly on the closed end 32 of the outer shell 26. Additionally, a wide variety of coil combinations using one or more coils may be used to rotate the armature 24 and shaft 16, including conventional cross-windings. If the assembly 14 is used in a gauge, return springs or weighted pointers may be used to return the gauge to zero.

**Claims**

1. An armature assembly comprising a shaft (16) including an armature (24) adapted to be magnetically charged to form a permanent magnet mounted on the shaft (16); a first bearing (30) for receiving rotatably a first end of the shaft; a second bearing (22) for receiving rotatably a portion of the shaft at an opposite end of the armature relative to the first end of the shaft (16); an outer shell (26) of substantially magnetically permeable material including a cylindrical cavity (28) therein, with a closed end (32) and an open end; the first bearing (30) being disposed in the cavity at the closed end (32), the open end being substantially sealed to the second bearing (22) so as to form a substantially fluid impermeable capsule; the shaft (16) being received in the first and second bearings in such a manner that the armature is rotatable within the cavity (28), the outer shell (26) including an outer surface within such a distance of the armature (24) as to allow the armature to be charged while fitted within the capsule from a magnetic field originating outside the capsule so as to become permanently magnetized thereby.

2. An armature assembly according to claim 1, wherein the second bearing (22) is adapted to form a leak-resistant seal with the shaft (16).

3. An armature assembly according to claim 1 or 2, wherein a channel (20) facing into the cavity (28) is provided in the second bearing.

4. An armature assembly according to claim 1 2 or 3, wherein damping fluid (25) is provided in the cavity (28).

5. An armature assembly according to any one of claims 1 to 4, wherein first and second spacers (12,13) are provided between, respectively, the first bearing (30) and the armature (24) and the second bearing (22) and the armature (24).

6. An armature assembly according to any preceding claim, wherein the outer shell (26) is formed of aluminium.

7. Apparatus comprising an armature assembly according to any preceding claim and least one coil (40) mounted in proximity to the armature assembly (14) and adapted to create a magnetic field to rotate the shaft (16).

FIG.1

FIG.2

| DOCUMENTS CONSIDERED TO BE RELEVANT | | | EP 91202369.4 |

| Category | Citation of document with indication, where appropriate, of relevant passages | Relevant to claim | CLASSIFICATION OF THE APPLICATION (Int. Cl.5) |
|---|---|---|---|
| Y | GB - A - 1 275 928 (KODAK) * Fig. * | 1 | G 01 R 1/14 G 01 R 1/04 |
| Y | DD - A - 267 803 (MEßGERÄTEWERK BEIERFELD) * Fig. * | 1 | |
| A | US - A - 3 891 921 (PATTERSON) * Abstract * | 1 | |
| A | DE - B - 1 238 564 (SIEMENS) * Fig. * | 1 | |

TECHNICAL FIELDS
SEARCHED (Int. Cl.5)

G 01 R 1/00
G 12 B 3/00
G 12 B 9/00

The present search report has been drawn up for all claims

| Place of search | Date of completion of the search | Examiner |
|---|---|---|
| VIENNA | 17-01-1992 | KUNZE |

EPO FORM 1503 03.82 (P0401)